# EUROPÄISCHE PATENTSCHRIFT

(11) **EP 3 722 371 B1**
(45) Veröffentlichungstag und Bekanntmachung des Hinweises auf die Patenterteilung: **07.10.2026**
(21) Anmeldenummer: 20163507.5
(22) Anmeldetag: 17.03.2020
(51) Int. Cl.: C08L 83/04, C09D 183/04, C09D 183/10

(54) **WÄSSRIGE POLYORGANOSILOXANHYBRIDHARZ-DISPERSION**
AQUEOUS POLYORGANOSILOXANE HYBRID RESIN DISPERSION
DISPERSION AQUEUSE DE RÉSINE POLYORGANOSILOXANHYBRIDE

(30) Priorität: 01.04.2019 EP 19166481
(43) Veröffentlichungstag der Anmeldung: 14.10.2020
(73) Patentinhaber: Evonik Operations GmbH, 45128 Essen (DE)
(72) Erfinder: Seyfried, Mona, 45147 Essen (DE); Silber, Stefan, 47804 Krefeld (DE); de Gans, Berend-Jan, 45478 Mülheim an der Ruhr (DE); Fiedel, Michael, 45239 Essen (DE); Hallack, Markus, 46514 Schermbeck (DE)
(74) Vertreter: Evonik Patent Association

(56) Entgegenhaltungen:
- EP-A1- 0 117 607
- WO-A1-2015/091901
- DE-A1- 102008 000 585
- DE-A1- 4 415 322

## Beschreibung

Die vorliegende Erfindung betrifft wässrige Polyorganosiloxanhybridharz-Dispersionen, deren Herstellungsverfahren und Verwendung.

Reine Silikonharze, sog. Polyorganosiloxane, sind bekannt für ihre thermische Stabilität und Witterungsstabilität. Sie werden zur Imprägnierung auf Beton, in hochtemperaturbeständigen Beschichtungen oder in wetterbeständigen Außenbeschichtungen eingesetzt. Um die Beständigkeit von Polyorganosiloxanen zu steigern, werden diese mit anderen Polymeren modifiziert. Die wechselseitige chemische Verknüpfung der Silikonharze mit diesen Polymeren findet in einer frühen Phase des Herstellverfahrens statt.

Bekannte organisch-modifizierte Polyorganosiloxanharze, im weiteren Polyorganosiloxanhybridharze genannt, sind Silikonalkydharze, Silikonpolyesterharze, Silicon-Epoxid-Hybrid Harze, Silikonpolyurethanharze und Silikonpolyacrylatharze.

Somit lassen sich die positiven Eigenschaften von reinen Silikonharzen, wie Temperaturbeständigkeit, Witterungsbeständigkeit und niedrige Oberflächenspannung, mit den positiven Eigenschaften von z.B. Polyestern, wie niedrige Thermoplastizität, hohe Elastizität und gute Pigmentbenetzung, vereinen.

Als besonders vorteilhaft erweisen sich die Eigenschaften von Silikonpolyesterharzen bei der dekorativen Beschichtung von thermisch belastbaren Haushaltsgeräten wie Toastern, Höhensonnengehäusen, Heizlüftern und Kochherden sowie der Außenbeschichtung von Friteusen, Töpfen und Pfannen. Beschichtungen von Haushaltsgegenständen müssen zudem detergentienfest sein. Das bedeutet, dass sie die heute übliche Reinigung in der Spülmaschine in Gegenwart tensidhaltiger und stark alkalischer Reinigungsmittel dauerhaft ohne Beschädigung überstehen müssen. Die Detergentienfestigkeit einer Beschichtung wird allgemein durch die Lackformulierung, insbesondere aber durch das eingesetzte Harz, bestimmt.

Auch lassen sich die Eigenschaften der Epoxidharze mit den Eigenschaften der Silikonharze vereinen. Diese Silicon-Epoxid-Hybrid Harze zeichnen sich im Vergleich zu reinen Silikonharzen durch bessere Metallhaftung und Korrosionsschutz sowie eine bessere Beständigkeit gegen Chemikalien aus. Eine typische Anwendung sind Auspuffbeschichtungen, aber auch Anstrichsysteme für keramische Substrate wie Steinzeug aller Art oder Beton. Auch werden derartige Beschichtungssysteme im Bereich der Schifffahrt, so zur Beschichtung von Schiffsrümpfen, marinen Unter- und Überseeinstallationen und Hafenanlagen eingesetzt.

Üblicherweise werden Polyorganosiloxanhybridharze in einem organischen Lösungsmittel, wie beispielsweise aromatischen Kohlenwasserstoffen, Estern, Ethern oder Ketonen, z.B. Xylol, Toluol, Solvesso und Methoxypropyl-, Ethyl- und Butylacetat, zur Verfügung gestellt. Der Vorteil lösungsmittelhaltiger Formulierungen liegt in der leichten Applizierbarkeit, den guten Verlaufseigenschaften sowie der Bildung eines Initialfilmes auf dem Substrat. Die Polyorganosiloxanhybridharzfilme können physikalisch getrocknet, reaktiv als 2 Komponentensystem gehärtet oder eingebrannt werden. Auch sind raumtemperaturhärtende Systeme bekannt.

Lösungsmittelhaltige Systeme haben jedoch toxikologische und ökologische Nachteile. Der hohe Gehalt an brennbaren und teils gesundheitsschädlichen Lösungsmitteln ist aus Gründen des Arbeits-, Gesundheits- und Umweltschutzes zunehmend kritischer zu bewerten. Zudem unterliegt der Einsatz von Lösungsmitteln weltweit zunehmend gesetzlichen Regulierungen. Vielfach erfordern zudem Umweltzeichen (Blauer Engel, Nordic Swan, usw.), oder Industrienormungen entlang der Wertschöpfungskette (RAL, IKEA, usw.) den gänzlichen Verzicht oder die drastische Reduzierung von Lösungsmitteln.

Es wird daher konsequent nach lösungsmittelarmen oder gänzlich lösungsmittelfreien Systemen gesucht. Aus dem Stand der Technik sind zahlreiche Lösungsvorschläge für reine Silikonharze, sogenannte Polyorganosiloxane, beschrieben.

EP 098 940 beschreibt ein Verfahren, bei dem ein flüssiges oligomeres Siloxan mit Polyvinylalkohol oder einem Celluloseether emulgiert wird, wobei dann in dieser Emulsion die Kondensation des flüssigen Oligoorganosiloxans zu einem hochviskosen oder festen Polyorganosiloxan erfolgt. Die Nachteile dieses Verfahren bestehen in zusätzlichem technologischen Aufwand, da die Synthese des flüssigen oligomeren Siloxans eine andere Technologie als die Synthese der polymeren Organosiloxane erfordert und die Kondensation in der Emulsion nur schwer kontrollierbar ist.

DE 21 58 348 beschreibt ein Verfahren zur Herstellung von Emulsionen auf Basis hochviskoser, zu Kautschuken vernetzbarer Siloxane, bei dem eine stark verdünnte Voremulsion, die mindestens 150% Wasser und mindestens 80% Emulgator, bezogen auf das Siloxan, enthält, hergestellt wird und diese Emulsion durch Abdestillation eines Lösemittel/Wasser-Gemisches aufkonzentriert wird. Dieses Verfahren benötigt eine vergleichsweise hohe Emulgatormenge, was bei vielen Anwendungen wegen der starken Veränderung des anwendungstechnischen Profils unerwünscht ist und auch die Kosten erhöht. Der maximale Siloxangehalt liegt bei 45% und es verbleiben 5 bis 7% Lösemittel in der Emulsion.

DE 44 15 322 A1 beschreibt ein Verfahren zur Herstellung wässriger Silikonharzemulsionen unter Verwendung eines in einem organischen Lösemittel wie zum Beispiel Toluol gelösten, polymeren Organosiliciumverbindung, wobei nach Zugabe eines Emulgatorgemisches bestehend aus einem ethoxylierten Triglycerid und einem ethoxylierten Tridecylalkohol und Wasser zu der polymeren Organosiliciumverbindung und Erreichen einer homogenen, nicht mehr fließfähigen Mischung das organische Lösemittel als Lösemittel/Wasser-Gemisch abgetrennt wird, bevor anschließend die für das Erreichen der gewünschten Endkonzentration benötigte Wassermenge sowie gegebenenfalls bekannte Additive homogen eingearbeitet werden. Ein Hinweis darauf, dass dieses Verfahren für andere Harze, beispielsweise Polyorganosiloxanhybridharze, als die beschriebenen Polyorganosiloxane geeignet ist, kann diese Schrift nicht entnommen werden.

Ebenfalls kann aus der DE 10 2008 000 585 nicht entnommen werden, dass es für Polyorganosiloxanhybridharze geeignet ist.

Aus dem Stand der Technik ist weiterhin die WO 2015/091901 bekannt, die eine wässrige Dispersion von silikonmodifizierten Polyesterharzen beschreibt, wobei der Restlösungsmittelgehalt der wässrigen Dispersion in Bezug auf den Festkörpergehalt des silikonmodifizierten Polyesterharzes in der Dispersion, bedingt durch das in der Schrift beschriebene Verfahren, nicht kleiner als 6 Gew.-% erreichen kann. Dieser Nachteil konnte im Vergleichsbeispiel belegt werden.

Der vorliegenden Erfindung lag daher die Aufgabe zugrunde, eine wässrige Polyorganosiloxanhybridharz-Dispersion bereitzustellen, die in verschiedenen Beschichtungen einsetzbar ist, ohne dass die übrigen Lackeigenschaften und der Nutzwert für die jeweilige Anwendung nennenswert beeinträchtigt werden, und dass der Restlösungsmittelgehalt in Bezug auf den Festkörpergehalt geringer ist als im Stand der Technik bekannt.

Überraschenderweise konnte die Aufgabe durch eine wässrige Polyorganosiloxanhybridharz-Dispersion gemäß Anspruch 1 gelöst werden.

Überraschend wurde festgestellt, dass die erfindungsgemäße Dispersion einen Restlösungsmittelgehalt < 6,0 Gew.-%, bevorzugt < 2,5 Gew-%, besonders bevorzugt < 1,0 Gew.-%, bezogen auf die Polyorganosiloxanhybridharz-Dispersion bei einem Festkörpergehalt von 30,0 Gew.-% - 70,0 Gew.-%, bevorzugt 45,0 Gew.-% - 55,0 Gew.-%, bezogen auf die Polyorganosiloxanhybridharz-Dispersion aufweist.

Die erfindungsgemäß gewählten Festkörpergehalte sind besonders vorteilhaft, da sie den Wünschen des Anwenders hinsichtlich Lagerstabilität, Einsatzmenge und der Freiheit bei der Formulierung und Anwendung widerspiegeln.

Im einem Vergleichsbeispiel konnte dargelegt werden, dass Dispersionen, hergestellt nach dem Verfahren gemäß WO 2015/091901, maximal einen Restlösungsmittelgehalt von 6 Gew.-% bei einem Festkörpergehalt von 30,0 Gew.-% bezogen auf die Polyorganosiloxanhybridharz-Dispersion erreichen. Wird der Festkörpergehalt erhöht, so erhöht sich der Restlösungsmittelgehalt in der Dispersion.

Im Sinne der Erfindung besteht der Festkörpergehalt aus Polyorganosiloxanhybridharz und Emulgator.

Im Sinne der Erfindung werden Lösungsmittel und Lösemittel als Synonyme verwendet.

Ein weiterer Vorteil der Erfindung ist der Aspekt der Arbeitssicherheit. Auch bei der Verwendung von Produkten, die geringe Mengen entflammbares Lösungsmittel enthalten, sind einige grundsätzliche Arbeitsschutzmaßnahmen erforderlich. So ist der Flammpunkt eine wichtige Angabe, um Vorkehrungen für die Arbeitssicherheit zu treffen. Um Brand- und Explosionsgefahren zu vermeiden, werden lösungsmittelhaltige Produkte mit hohem Flammpunkt bevorzugt gegenüber Produkten mit niedrigem Flammpunkt.

Überraschend konnte festgestellt werden, dass die erfindungsgemäße Dispersion einen Beitrag zur Arbeitssicherheit leistet. Denn je niedriger der Restlösungsmittelgehalt in der Dispersion ist, desto höher liegt der Flammpunkt.

Bevorzugt weist die erfindungsgemäße Polyorganosiloxanhybridharz-Dispersion einen Flammpunkt gemäß der in dieser Anmeldung beschriebene Methode von > 30,0°C, bevorzugt > 60,0°C und besonders bevorzugt > 90,0°C, auf.

Prinzipiell unterscheidet der Fachmann wässrige Polymerdispersionen in Sekundär- und Primärdispersionen. Die Sekundärdispersionen entstehen aus Polymeren, die konventionell hergestellt und dann in einem Folgeschritt aus Lösung oder Schmelze in die wässrige Dispersion überführt werden. Demgegenüber handelt es sich bei Primärdispersionen um solche, bei denen das Polymer unmittelbar in disperser Verteilung im wässrigen Dispergiermedium in Gegenwart eines Emulgators selbst erzeugt wird. Allen Herstellverfahren ist im Wesentlichen gemein, dass zum Aufbau des Polymers Monomere mitverwendet werden oder dass dieser Aufbau ausschließlich aus solchen Monomeren erfolgt.

EP 0 008 090 A1 beschreibt ein Verfahren zur Herstellung eines wassermischbaren Silikon-Polyester-Harzes, bei dem die stabile Dispersion auf die Verwendung eines "aufgesäuerten" Polyesters während der Herstellung des Silikon-Polyester-Harzes basiert. Neben dem sehr aufwendigen Verfahren besteht zudem die Gefahr der Rückspaltung des Polyesters (saure Esterhydrolyse) durch die bei diesem Verfahren erforderlichen Säurezahlen von 25 - 110.

Den Forderungen nach einer Reduktion der Lösemittelemission kann mit der erfindungsgemäßen wässrigen Polyorganosiloxanhybridharz-Dispersion Rechnung getragen werden.

Bevorzugt handelt es sich bei dem Polyorganosiloxanhybridharz um ein mit organischem Polymer-modifiziertes Polyorganosiloxan.

Besonders bevorzugt handelt es sich bei dem Polyorganosiloxanhybridharz um Umsetzungsprodukte einer Zusammensetzung enthaltend
- Komponente A) 5 bis 95 Gew.-Teile, bevorzugt 10 bis 70 Gew.-Teile eines oder mehrerer Polyorganosiloxane der allgemeinen Formel

   RₐSi(OR')_{b}O_{(4-a-b/2)} Formel (I)

   mit 0<a<2, 0<b<2 und a+b<4,
- optional Komponente B) 0 - 20 Gew.-Teile, bevorzugt 1 -10 Gew.-Teile eines oder mehrerer linearer und/oder verzweigter Polyorganosiloxane der Formel

   R"O-[R‴₂Si-O]ₙ- Formel (II)
- Komponente C) 5 bis 95 Gew.-Teile, bevorzugt 30 bis 90 Gew.-Teile eines organischen Polymers,
wobei
Rₐ, R', R" und R‴ jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht.

Die Polyorganosiloxanhybridharze können in bekannter Weise hergestellt werden. Übliche Verfahren sind aus der DE 10 2013 218976 A1, DE 10 2013 218981A1, US 3,154,597 oder US 3,170,962 zu entnehmen. Dem Fachmann sind weitere Literatur, wie z.B. "Silicone resins and their combination" von Wernfried Heilen, Kapitel 2.2 Silicone combination resins/silicone resin hybrids, 2015 oder "High Silicones and Silicone-Modified Materials strength Silicone-Urethane Copolymers: Synthesis and Properties, Chapter 26, pp 395-407, bekannt.

Dabei wird beispielsweise entweder ein Polyorganosiloxan mit einem hydroxygruppenhaltigen organischen Polymer umgesetzt oder das organische Polymer in Anwesenheit des Polyorganosiloxans durch geeignete Monomere oder ein organisches Polymer mit Alkoxysilan-Funktionalität durch Hydrolyse/Kondensation bzw. Equilibrierung mit Alkoxysilanmonomeren bzw. Siloxanoligomeren hergestellt.

Bevorzugt handelt es sich bei dem Polyorganosiloxan um ein lineares, einfach oder mehrfach verzweigtes Si-OH- oder SiOR³- funktionelles Polyorganosiloxan.

Polyorganosiloxane werden in der Literatur auch als Siloxan-Oligomere, alkoxyfunktionelle Methyl-, Phenyl- und Methyl-/Phenyl-Siloxane, hydroxyfunktionelle Methyl-, Phenyl- und Methyl-/Phenyl- Silikonharze oder Silanole bezeichnet.

Alkoxyfunktionelle Methyl-, Phenyl- aber auch Methyl-/Phenyl- Siloxan-Oligomere sind im Hause Fa. ShinEtsu erhältlich, u.a. unter den Handelsnamen KC-89S, KR-500, X 40-9225, X 40-9246, X 40-9250, KR-401N, X-40-9227, KR-510, KR-9218, KR-213.

Methoxyfunktionelle Methyl-, Phenyl- und Methyl-/Phenyl-Siloxane sind erhältlich von Dow Corning unter den Handelsnamen Dow Corning^{®} US-CF 2403 Resin, US-CF 2405 Resin, 3037 Intermediate, 3074 Intermediate, RSN-5314 Intermediat. Silanolfunktionelle Methyl-/Phenylharze werden unter dem Handelsnamen RSN-0409 HS Resin, RSN-0431 HS Resin, RSN-0804 Resin, RSN-0805 Resin, RSN-0806 Resin, RSN-0808 Resin, RSN-0840 Resin vertrieben.

Alkoxyfunktionelle Methyl-/Phenyl-, Phenyl- und Methyl- Silikonharze, die auch zum entsprechenden Silanol hydrolysiert angeboten werden, finden sich unter dem Handelsnamen SILRES^{®} von der Fa. Wacker Chemie im Handel, wie etwa mit der Zusatzbezeichnung REN 50, REN 60, REN 80, KX, HK 46, MSE 100 oder SY 300, IC 836, REN 168, SY 409, IC 232, SY 231, IC 368, IC 678.

Die Herstellung von derartigen Silikonharzen ist der Literatur lange bekannt (siehe hierzu in W. Noll - Chemie und Technologie der Silicone, Wiley-VCH Verlag GmbH & Co. KGaA, Weinheim, 1960) und wird auch in der deutschen Patentschrift DE 34 12 648 beschrieben.

Vorzugsweise handelt es sich bei dem organischen Polymer um Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat, deren (Teil-) Hydrolysate und Derivate, Phenolharze, Fluorpolymere, Alkydharze und Mischungen daraus.

Vorzugsweise werden Polyester eingesetzt, ausgewählt aus den Umsetzungsprodukten aus aromatischen und/oder aliphatischen und/oder cycloaliphatischen Monocarbonsäuren und/oder Dicarbonsäuren und/oder Polycarbonsäuren sowie deren Anhydride und/oder Ester mit linearen und/oder verzweigten, aliphatischen und/oder cycloaliphatischen und/oder aromatischen Diolen und/oder Polyolen. Beispiele für übliche Carbonsäuren sind Phthalsäure, Phthalsäureanhydrid, Dimethylterephthalat Isophthalsäure, Terephthalsäure, 1,4-Cyclohexandicarbonsäure, Bernsteinsäure, Bersteinsäureanhydride Sebazinsäure, Maleinsäure, Maleinsäureanhydrid, Fumarsäure, Methyltetrahydrophthalsäure, Methyltetrahydrophthalsäureanhydrid, Methylhexahydrophthalsäure, Methylhexahydrophthalsäureanyhdrid, Hexahydrophthalsäure, Tetrahydrophthalsäure, **Dodecandisäure,** Adipinsäure, Azelainsäure, Isononansäure, 2-Ethylhexansäure, Pyromellitsäure Pyromellitsäuredianhydrid, Trimellitsäure, und/oder Trimellitsäureanhydrid Beispiele für übliche Diole und oder Polyole sind Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit sowie Bisphenol A, B, C, F, Norbornylenglykol, 1,4-Benzyldimethanol und - ethanol, 2,4-Dimethyl-2-ethylhexan-1,3-diol.

Vorzugsweise werden Epoxidharze mit wenigstens zwei 1,2-Epoxidgruppen pro Molekül eingesetzt. Beispiele für geeignete Epoxidharze sind aliphatische oder aromatische Epoxide: Eponex^{®} sowie EPON^{®} Harze der Fa. Hexion, Epalloy^{®} Harze der Fa. Emerald Performance Materials Company, Epotec^{®} Harze der Fa. Aditya Birla Chemicals, Denacol^{®} Harze der Fa. Nagase ChemteX, Araldite^{®} Harze der Fa. Huntsman, Beckopox ^{®} der Fa. Allnex, VORAFORCE^{®} Harze der Fa. Dow Chemical Company.

Die verschiedenen Fragmente der in der Formel (I) bzw. Formel (II) angegebenen Siloxanketten können statistisch verteilt sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (I).

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Bei Prozentangaben handelt es sich, wenn nicht anders angegeben, um Angaben in Gewichtsprozent.

Sind nachfolgend Messwerte angegeben, so sind diese Messungen, wenn nicht anders angegeben, bei Normalbedingungen (25 °C und 1013 mbar) durchgeführt worden.

Werden nachfolgend Mittelwerte angegeben, so handelt es sich, wenn nicht anderes angegeben, um Gewichtsmittel.

Besonders bevorzugt enthält das organische Polymer Hydroxylgruppen und/oder acide Wasserstoffe.

Vorzugsweise handelt es sich bei den Emulgatoren um teilhydrolysierte Polyvinylacetate mit einem Alkoholysegrad zwischen 10% - 99% (mol/mol), bevorzugt zwischen 50% und 95% (mol/mol), und besonders bevorzugt zwischen 70% und 90% (mol/mol).

Vorzugsweise weisen die teilhydrolysierten Polyvinylacetate eine Viskosität, gemessen in einer 4%igen wässrigen Polyvinylacetatlösung bei 20°C nach DIN 53015, 1 - 50 mPa s, bevorzugt 1 - 40 mPa s und besonders bevorzugt 1 - 30 mPa s auf.

Vorzugsweise weist der Emulgator kein gebundenes Silan auf.

Es ist auch vorstellbar, die erfindungsgemäßen Emulgatoren mit anderen Emulgatoren, wie beispielsweise mit anionischen, kationischen oder nicht-ionischen Emulgatoren, zusammen einzusetzen. Werden mehrere Emulgatoren verwendet, so werden diese in der vorliegenden Erfindung als Emulgatorsystem verstanden.

Bevorzugt liegt das Gewichtsverhältnis von Polyorganosiloxanhybridharz zu Emulgator oder Emulgatorsystem zwischen 5 - 50, bevorzugt zwischen 7 - 40, und besonders bevorzugt zwischen 10 - 30.

Falls erforderlich weist die Polyorganosiloxanhybridharz-Dispersion vorzugsweise weitere Zusatzstoffe auf, die ausgewählt aus Entschäumern, Entlüftern, Rheologieadditiven, Konservierungsstoffen, Substratnetzmitteln, Vernetzern, Trocknungshilfen, Katalysatoren, Antioxidantien, Hautverhinderungsmitteln, Anti-Absatzmitteln, Verdickern, Koaleszenzmitteln, Filmbildehilfsmitteln, Füllstoffen, Pigmenten und/oder Dispergiermitteln sind.

Vorzugsweise handelt es sich bei den Pigmenten um organische, anorganische Pigmente oder Rußpigmente. Als anorganische Pigmente können beispielsweise Eisenoxide, Chromoxide oder Titanoxide genannt werden. Geeignete organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolopyrrol-, Napthalenetetracarbonsäure-, Perylen-, Isoamidolin(on)-, Flavanthron-, Pyranthron- oder Isoviolanthron-Reihe. Als Ruße können Gasruße, Flammruße oder Furnaceruße eingesetzt werden. Diese Ruße können zusätzlich nachoxidiert und/oder verperlt sein.

Optional können weitere Zusatzstoffe zugesetzt werden. Als Zusatzstoff gilt dabei jegliche Komponente, die die Eigenschaften der erfindungsgemäßen Dispersion positiv beeinflusst. Es können unabhängig voneinander ein oder mehrere Zusatzstoffe zugesetzt werden. Im Weiteren werden einige Zusatzstoffe aufgeführt, die für die erfindungsgemäße Dispersion verwendet werden können. Die Aufzählung ist nicht abschließend: Als Zusatzstoffe sind insbesondere Netz- und Dispergieradditive vorteilhaft einsetzbar. Im Markt sind eine Vielzahl von Netz- und Dispergieradditiven erhältlich, die für die erfindungsgemäßen Dispersionen verwendet werden können. Diese Dispergieradditive leiten sich dabei beispielsweise aus den im Stand der Technik hinlänglich bekannten Polymerklassen wie Styrol-Maleinsäureanhydrid Copolymeren, Acrylaten, Polyethern, z.B. Styroloxidpolyether, Polyestern, Aminopolyestern, Polyurethane und Aminopolyethern ab. Dabei können die Additive unterschiedliche Topologien aufweisen, beispielsweise linear, verzweigt, kammartig oder sternförmig. Üblicherweise weisen Netz- und Dispergieradditive eine heterogene Struktur auf, die sich in eine Haftgruppe und eine stabilisierende Seitenkette aufteilt.

Neben Pigmenten können auch Füllstoffe in den erfindungsgemäßen Dispersionen eingesetzt werden. Geeignete Füllstoffe sind beispielsweise solche auf Basis von Kaolin, Talkum, Glimmer, anderen Silikaten, Quarz, Christobalit, Wollastonit, Perlite, Diatomeenerde, Faserfüllstoffe, Alumiumhydroxid, Bariumsulfat, Glas oder Calciumcarbonat.

Die Verwendung eines Entschäumers oder Entlüfters kann vorteilhaft sein, um in Verarbeitungs- bzw. Herstellungsprozessen die eingetragene Luftmenge aktiv zu reduzieren.

Genannt seien beispielsweise solche auf Mineral- oder Pflanzenölbasis oder auf Basis von Polyethersiloxanen, teilweise gefüllt mit partikulären Komponenten wie zum Beispiel Silica. Als weitere Zusatzstoffe können beispielsweise Bindemittel, Farbstoffe, Oberflächenadditive, Compatibilizer, Netz- und Spreitmittel, Vernetzer, Rheologieadditive, Verdicker, UV Stabilisatoren und Konservierungsmittel genannt werden.

Vorzugsweise werden als Konservierungsstoffe Fungizide, Bakterizide, Pestizide, Algizide und/oder Herbizide verwendet.

Bevorzugt liegt der mittlere, volumengewichtete Durchmesser der Polyorganosiloxanhybridharzpartikel zwischen 0,1 - 10,0 µm, bevorzugt zwischen 0,1 - 2,0 µm, besonderes bevorzugt zwischen 0,2 - 1,0 µm und ganz besonders bevorzugt zwischen 0,2 - 0,7 µm, gemessen nach ISO 13320:2009. Für die vorliegende Erfindung wurde der mittlere, volumengewichtete Durchmesser der Partikeln mit Hilfe eines Coulter LS 13320-Instruments der Fa. Beckman Coulter, bestimmt.

Vorzugsweise weist die Polyorganosiloxanhybridharz-Dispersion einen Festkörpergehalt von 30,0 Gew.-% - 70,0 Gew.-%, bevorzugt 45,0 Gew.-% - 55,0 Gew.-%, bezogen auf die Dispersion auf.

Ein weiterer Gegenstand der Erfindung ist ein Verfahren zur Herstellung wässriger Polyorganosiloxanhybridharz-Dispersion umfassend die Schritte
a. Emulgieren einer Polyorganosiloxanhybridharz-Lösung enthaltend ein organisches Lösungsmittel mit einer Emulgatorlösung umfassend mindestens einen Emulgator auf Basis von teilhydrolysierten Polyvinylacetaten und
b. Abtrennung des Lösungsmittels.

Bevorzugt wird in Schritt a) zusätzlich Wasser zugegeben. Beispielsweise kann somit der Festkörpergehalt in diesem Schritt festgelegt bzw. zumindest in einem gewünschten Festkörpergehaltsbereich vorgelegt werden.

Bevorzugt kann nach Schritt b) der Festkörpergehalt für die wässrige Polyorganosiloxanhybridharz-Dispersion eingestellt werden.

Besonders bevorzugt können sowohl in Schritt a) einen gewünschten Festkörpergehaltsbereich vorgelegt und nach Schritt b) der Festkörpergehalt der erfindungsgemäßen wässrigen Polyorganosiloxanhybridharz-Dispersion eingestellt werden.

Das erfindungsgemäße Verfahren ermöglicht somit eine elegante Herstellungsmethode, mit der der Festkörpergehalt zu Beginn vorbestimmt werden kann. Eine Feinjustierung kann, falls erforderlich, nachgeschaltet werden.

Vorzugsweise werden teilhydrolysierte Polyvinylacetate mit einem Alkoholysegrad zwischen 10% - 99% (mol/mol), bevorzugt zwischen 50% und 95% (mol/mol), und besonders bevorzugt zwischen 70% und 90% (mol/mol) eingesetzt.

Vorzugsweise weist der Emulgator kein gebundenes Silan auf.

Vorzugsweise weisen die teilhydrolysierten Polyvinylacetate eine Viskosität, gemessen in einer 4%igen wässrigen Polyvinylacetatlösung bei 20°C nach DIN 53015, von 1 - 50 mPa s, bevorzugt 1 - 40 mPa s und besonders bevorzugt 1 - 30 mPa s auf.

Derartige Emulgatoren sind beispielsweise unter der Markenbezeichnung Mowiol, Elvanol oder Poval (Fa. Kuraray), Gohsenol (Fa. Nippon Gohsei), Selvol (Fa. Sekisui), Polyviol (Fa. Wacker) erhältlich.

Vorzugsweise können weitere Emulgatoren ausgewählt aus der Gruppe der anionischen, kationischen, zwitterionischen oder nicht-ionischen Emulgatoren, verwendet werden.

Bevorzugt handelt es sich bei dem eingesetzten Polyorganosiloxanhybridharz um Umsetzungsprodukte einer Zusammensetzung enthaltend
- Komponente A) 5 bis 95 Gew.-Teile, bevorzugt 10 bis 70 Gew.-Teile eines oder mehrerer Polyorganosiloxane der allgemeinen Formel

   RₐSi(OR')_{b}O_{(4-a-b/2)} Formel (I)

   mit 0<a<2, 0<b<2 und a+b<4,
- optional Komponente B) 0 - 20 Gew.-Teile, bevorzugt 1 -10 Gew.-Teile eines oder mehrerer linearer und/oder verzweigter Polyorganosiloxane der Formel

   R"O-[R‴₂Si-O]ₙ- Formel (II)
- Komponente C) 5 bis 95 Gew.-Teile, bevorzugt 30 bis 90 Gew.-Teile eines organischen Polymers,
wobei
Rₐ, R', R" und R‴ jeweils unabhängig voneinander für einen Alkylrest mit 1 bis 8 C-Atomen oder einen aromatischen Rest mit 6 bis 20 C-Atomen, und n für eine Zahl im Bereich von 4 bis 250 steht.

Bevorzugt handelt es sich bei dem Polyorganosiloxan um ein lineares, einfach oder mehrfach verzweigtes Si-OH- oder SiOR³- funktionelles Polyorganosiloxan. Im Markt erhältliche Polyorganosiloxane sind oben beschrieben.

Vorzugsweise handelt es sich bei dem organischen Polymer um Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat, deren (Teil-) Hydrolysate und Derivate, Phenolharze, Fluorpolymere, Alkydharze und Mischungen daraus.

Besonders bevorzugt handelt es sich bei dem organischen Polymer um Hydroxylgruppen enthaltenden organischen Polymere, vorzugsweise ausgewählt aus der Gruppe der Polyepoxide, Polyester, Polyacrylate, Polymethacrylate, Polyurethane und Cellulosederivate.

Vorzugsweise werden Polyester eingesetzt, ausgewählt aus den Umsetzungsprodukten aus aromatischen und/oder aliphatischen und/oder cycloaliphatischen Monocarbonsäuren und/oder Dicarbonsäuren und/oder Polycarbonsäuren sowie deren Anhydride und/oder Ester mit linearen und/oder verzweigten, aliphatischen und/oder cycloaliphatischen und/oder aromatischen Diolen und/oder Polyolen. Beispiele für übliche Carbonsäuren sind Phthalsäure, Phthalsäureanhydrid, Dimethylterephthalat Isophthalsäure, Terephthalsäure, 1,4-Cyclohexandicarbonsäure, Bernsteinsäure, Bernsteinsäureanhydride Sebazinsäure, Maleinsäure, Maleinsäureanhydrid, Fumarsäure, Methyltetrahydrophthalsäure, Methyltetrahydrophthalsäureanhydrid, Methylhexahydrophthalsäure, Methylhexahydrophthalsäureanyhdrid, Hexahydrophthalsäure, Tetrahydrophthalsäure, Dodecandisäure, Adipinsäure, Azelainsäure, Isononansäure, 2-Ethylhexansäure, Pyromellitsäure Pyromellitsäuredianhydrid, Trimellitsäure, und/oder Trimellitsäureanhydrid Beispiele für übliche Diole und oder Polyole sind Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit sowie Bisphenol A, B, C, F, Norbornylenglykol, 1,4-Benzyldimethanol und - ethanol, 2,4-Dimethyl-2-ethylhexan-1,3-diol.

Vorzugsweise werden Epoxidharze mit wenigstens zwei 1,2-Epoxidgruppen pro Molekül eingesetzt. Beispiele für geeignete Epoxidharze sind aliphatische oder aromatische Epoxide: Eponex^{®} sowie EPON^{®} Harze der Fa. Hexion, Epalloy^{®} Harze der Fa. Emerald Performance Materials Company, Epotec^{®} Harze der Fa. Aditya Birla Chemicals, Denacol^{®} Harze der Fa. Nagase ChemteX, Araldite^{®} Harze der Fa. Huntsman, Beckopox^{®} der Fa. Allnex, VORAFORCE^{®} Harze der Fa. Dow Chemical Company.

Vorzugsweise handelt es sich bei dem Lösemittel um ein organisches Lösungsmittel oder Mischungen davon, dass bei der Herstellung des Polyorganosiloxanhybridharzes eingesetzt wurde.

Vorzugsweise kann es sich bei dem Lösemittel auch um ein semi-organisches Lösungsmittel handeln.

Bevorzugt wird ein Lösungsmittel aus der Reihe der Ketone, ausgewählt aus Methylethylketon, Aceton, Methylisobutylketon, Diethylketon, Methylpropylketon, Cyclohexanon oder Methylcyclohexanon, Ester, ausgewählt aus Ethylacetat, Butylacetat, Ethylpropionat, Isobutylacetat oder tert-Butylacetat, Carbonate, beispielsweise Dialkylcarbonate oder cyclische Carbonate wie Ethylen- Propylen- oder Glycerincarbonat, aromatische Kohlenwasserstoffe, beispielsweise Xylol, zyklische Kohlenwasserstoffe, beispielsweise Cyclohexan, Kronenether bzw. Ether wie beispielsweise Dibutylether, Esterether beispielsweise Methoxypropylacetat, Siloxane beispielsweise Hexamethyldisiloxan, Octamethylcyclotetrasiloxan oder Decamethylcyclopentasiloxan, metallorganischen Germaniumverbindungen beispielsweise Tetramethylgermanium eingesetzt. Es ist vorstellbar, andere dem Fachmann bekannte Lösungsmittel oder Mischungen verschiedener Lösungsmittel einzusetzen.

Besonders bevorzugt weist das organische Lösungsmittel oder Mischungen davon bei Normaldruck beziehungsweise 1013 mbar einen Siedepunktsbereich von 50°C - 150°C, bevorzugt 90°C - 120°C auf.

Vorzugsweise erfolgt die Abtrennung des Lösungsmittels mittels Destillation bei vermindertem Druck mit oder ohne Strippinggas, mittels Wasserdampfdestillation, mittels eines (Diffusions-) Membranverfahrens oder eines Dünnschichtverdampfers.

Vorzugsweise weist die Polyorganosiloxanhybridharz-Lösung eine Polyorganosiloxanhybridharz-Konzentration von 40,0 Gew.-% - 95,0 Gew.-%, bevorzugt 60,0 Gew.-% - 70,0 Gew.-%, bezogen auf die Polyorganosiloxanhybridharz-Lösung, auf.

Vorzugsweise wird eine wässrige Emulgatorlösung oder eine wässrige Emulgatorsystemlösung eingesetzt, wobei deren Konzentration zwischen 5 - 40 Gew.-%, bevorzugt 10 - 30 Gew.-%, besonders bevorzugt 15 - 25 Gew.-% bezogen auf die Emulgatorlösung liegt.

Das erfindungsgemäße Verfahren unterscheidet sich von dem Verfahren nach der WO 2015/091901 dadurch, dass die Entfernung des Lösungsmittels in Gegenwart der Emulgatorlösung stattfindet. Es war überraschend, dass das Lösungsmittel signifikant vom Polyorganosiloxanhybridharz entfernt werden konnte. Unabhängig von der Anfangslösungsmittelkonzentration des Polyorganosiloxanhybridharzes konnten geringe Restlösungsmittelgehalte generiert werden, ohne dass die Stabilität und damit die Verarbeitbarkeit der Polyorganosiloxanhybridharz-Dispersion beeinträchtigt wurden.

Das Verfahren nach WO 2015/091901 beschreibt im ersten Schritt die Entfernung des Lösungsmittels eines Silikon-Polyester Hybridharzes, im zweiten Schritt die Homogenisierung des noch verarbeitbaren Harzes mit einer konzentrierten Emulgatorlösung und im dritten Schritt die Dispergierung durch Zugabe von Wasser zur Herstellung der Dispersion. Die Schrift schweigt über die Temperatur und Dauer im ersten Schritt. Somit liegt der Vorteil des erfindungsgemäßen Verfahrens auch in der Reduzierung der Herstellungsschritte, was zu Zeitersparnissen führt.

Ein weiterer Gegenstand der Erfindung ist daher auch die erfindungsgemäße wässrige Polyorganosiloxanhybridharz-Dispersion hergestellt nach dem erfindungsgemäßen Verfahren.

Ein weiterer Vorteil des erfindungsgemäßen Verfahrens ist die Erhöhung des Flammpunktes einer wässrigen Polyorganosiloxanhybridharz-Dispersion hergestellt nach dem erfindungsgemäßen Verfahren.

Die Verwendung der erfindungsgemäßen Polyorganosiloxanhybridharz-Dispersion in Beschichtungsstoffen, sowie Lacken und Farben, Substratbeschichtungen, Klebstoffen, struktureller Klebstoff, Compoundierungsmatrizes und Schlichten ist ebenfalls ein Gegenstand der Erfindung. Weitere Anwendungsbereiche sind in der Herstellung von Drucktinten oder 3D-Druck-Materialien.

Erfindungsgemäße Substrate, insbesondere Backbleche, Backformen, Pfannen, Metalltöpfe und dergleichen, beschichtet mit einer Zusammensetzung enthaltend einer erfindungsgemäßen Polyorganosiloxanhybridharz-Dispersion sind ebenso mitumfasst. Substrate sind vorzugsweise keramische, polymere oder metallische Untergründe.

Die erfindungsgemäßen Gegenstände werden nachfolgend beispielhaft beschrieben, ohne dass die Erfindung auf diese beispielhaften Ausführungsformen beschränkt sein soll.

### Methoden:

### Messung der Teilchengröße

Die Bestimmung der Teilchengröße der Dispersionen erfolgt gemäß ISO 13320:2009. Es wurde ein LS13320 Instrument der Firma Beckman-Coulter verwendet. Die Teilchengröße wurde berechnet unter Annahme eines Brechungsindexes n_{d} = 1,51. Der berechnete mittlere Teilchendurchmesser ist volumengewichtet.

### Bestimmung des Festkörpers:

Die Bestimmung des Gehalts an nichtflüchtigen Anteilen erfolgt gemäß DIN EN ISO 3251:2008, wobei im Rahmen der vorliegenden Erfindung für die Bestimmung des Festkörpers die Prüfung der Polyorganosiloxane sowie der der Polyorganosiloxanhybridharz-Lösungen 60 Minuten bei 180°C und für die Dispersion 60 Minuten bei 105°C durchgeführt werden.

### Viskositätsbestimmung

Die Bestimmung der Viskositäten, soweit nichts anderes angegeben, erfolgte mit Hilfe eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturanhängigkeit der Viskosität wurde die Temperaturen von Viskosimeter und Messflüssigkeit während der Messung auf +/-0,5 °C genau konstant gehalten. Weitere verwendete Materialien neben dem LV-Spindelsatz waren ein thermostatisierbares Wasserbad, ein Thermometer 0-100 °C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, so dass die Spindel bis zur Markierung im Produkt eintaucht. Die Messung wird mit Hilfe der Starttaste ausgelöst, wobei darauf geachtet wurde, dass die Messung im günstigen Messbereich von 50 % (+/-20 %) des maximal messbaren Drehmoments erfolgte. Das Ergebnis der Messung wurde am Display des Viskosimeters in mPas ausgegeben, wobei die Division durch die Dichte (g/ml) die Viskosität in mm²/s liefert.

### Restlösungsmittelgehalt

Die Bestimmung des Gehalts an Restlösungsmittel wurde in Anlehnung an die European Pharmacopoeia 5.4 Residual solvents durchgeführt.

### Pendelhärte nach König

Bei der Pendelhärte Bestimmung nach König (DIN 53157 oder EN ISO 1522) dient die Dämpfung eines schwingenden Pendels als Maß. Das Pendel mit zwei Edelstahlkugeln wird auf einen Lackfilm gesetzt. Es besteht eine physikalische Beziehung zwischen Dauer der Pendelschwingung, Amplitude und den geometrischen Abmessungen des Pendels. Das viskoelastische Verhalten der Beschichtung ist ausschlaggebend für die Härte. Wird das Pendel in Schwingung versetzt, rollen die Kugeln auf der Oberfläche und üben somit Druck auf sie aus. Die mehr oder weniger starke Rückfederung hängt von der Elastizität ab. Das Fehlen elastischer Kräfte verursacht eine starke Dämpfung der Pendelbewegung. Hohe elastische Kräfte dagegen verursachen nur eine geringe Dämpfung. Pendelhärte nach "König": Schwingungsanzahl in osc.

### 1 Oszillation = 1,4 Sekunden

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden in den nachfolgenden Beispielen Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Bestimmung des Flammpunkts:

Die Bestimmung des Flammpunkts erfolgte mit Hilfe eines Flammpunktprüfers mit geschlossenem Tiegel nach der Pensky-Martens- Methode, angelehnt an der DIN EN ISO 2719.

Der Pensky-Martens-Flammpunktprüfer mit geschlossenem Tiegel misst den Flammpunkt. Hierbei wird die niedrigste Temperatur, bei der eine Zündquelle die Dampfphase einer Probe entflammen lässt, abgelesen.

Es wurden jeweils 70 mL der erfindungsgemäßen Dispersionen aus Tabelle 5 eingesetzt. Vor der Messung wurden die Proben wie folgt vorbehandelt: Die Dispersionen mit einem Restlösungsmittelgehalt > 2,0 Gew.-% wurden auf 10 °C gekühlt und sofort vermessen. Dispersionen mit einem Restlösungsmittelgehalt ≤ 2,0 % wurden auf 15 °C gekühlt.

### Alle Dispersionen wurden auf einen Festkörpergehalt von 50 Gew.-% eingestellt

Es wurde eine Heizrate von 1,5 °C/min und eine Rührgeschwindigkeit von 120 UpM gewählt. Der Luftdruck betrug 994 mbar. Es wurden keine Umrechnungen vorgenommen, da die Korrektur kleiner als die Messungenauigkeit ist.

### Materialien und Geräte:

- Glasplatten, Fa. Gläserei Glänzer, Maße: 90 x 150 x 5mm
- PVC - Platten, Mat.Nr:4364002858, Fa. KVG Kunststoff Betriebs GmbH
- 300µm - Kastenrakel, Fa. Simex
- 300µm - Würfelrakel, Fa. TQC GmbH,
- Dispermat, Fa. VMA Getzmann mit Teflon-Scheibe
- Weithals - Glasflaschen
- Flammpunktprüfer mit geschlossenem Tiegel - PMA 4 (semi-automatisch), Fa. Petrotest
- Silikopon^{®} EW, Fa. Evonik Industries
- Poval^{®} 04-88, Fa. Kuraray
- Poval^{®} 03-80, Fa. Kuraray
- Poval^{®} 18-88, Fa. Kuraray
- Gohsenol^{®} KL-03, Fa. Nippon Gohsei
- Gohsenol^{®} KL-05, Fa. Nippon Gohsei
- Tergitol^{®} 15-S-5, Fa. DOW Chemical

### Beispiele

### Herstellung von erfindungsgemäßen wässrigen Polyorganosiloxanhybrid-Dispersionen

Für die Herstellung der erfindungsgemäßen wässrigen Polyorganosiloxanhybrid-Dispersion wird zunächst eine lösungsmittelbasierte Polyorganosiloxanhybrid-Lösung hergestellt. Das Lösungsmittel wird anschließend mit dem erfindungsgemäßen Verfahren entfernt.
1. Herstellung einer lösungsmittelbasierten Polyorganosiloxanhybrid-Lösung mit Polyester, (zur Vereinfachung wird diese im Weiteren als Silikon-Polyesterhybridlösung genannt)
1.1 Herstellung eines Polyorganosiloxans als Komponente A
Verwendete Lösungsmittel: Methylisobutylketon (MIBK), Diethylcarbonat (DEC), Methylpropylketon (MPK), Ethylacetat (EtAc), Isobutylacetat (iBuAc), Ethylisobutyrat (EtiBu).
Zunächst wurden drei Polyorganosiloxane POS 1, POS 2 und POS 3 gemäß EP 0 157 318 mit nachfolgenden Parametern aus Tabelle 1 hergestellt.
POS 4 ist ein kommerziell erhältliches Polyorganosiloxan der Fa. Dow Corning.

**Tabelle 1:**

| Bezeichnung | Chemische Bezeichnung | Alkoxygehalt [%] | Viskositat [mPas] | Losungs mittel | Festkorper [%] |
|---|---|---|---|---|---|
| POS 1 | Phenylmethylmethoxypolysiloxan | 14,7 | 1760 | - | 95,7 |
| POS 2 | Phenylmethoxy polysiloxan | 17,4 | 4470 | - | 98,4 |
| POS 3 | Phenylmethylethoxypolysiloxan | 15,1 | 450 | MIBK | 90,2 |
| POS 4 | Dow Corning^{®} 3074 | 16,8 | 184 | - | 88,4 |

1.2 Herstellung eines hydroxyfunktionellen Polyesters als Komponente C
Die hydroxyfunktionellen Polyester PES 1 - PES 5 wurden gemäß einem Verfahren, beschrieben in der DE 37 28 414 C1, durch Veresterung von Trimethylolpropan, Isophthalsäure und Ethylenglykol hergestellt. Die Einstellung des Festkörpers und der Viskosität erfolgen mit den Lösungsmitteln gemäß Tabelle 2.

**Tabelle 2:**

| Bezeichnung Polymerlösung | Lösungsmittel | Viskosität [mPas] | Festkörper [%] |
|---|---|---|---|
| PES 1 | EtiBu | 5930 | 70,2 |
| PES 2 | DEC | 6270 | 71,5 |
| PES 3 | MPK | 730 | 68,8 |
| PES 4 | MIBK | 860 | 70,4 |
| PES 5 | iBuAc | 4590 | 72,1 |

1.3 Herstellung von lösungsmittelbasierten Silikon-Polyesterhybridlösungen (Variante 1)
Die Silikon-Polyesterhybridlösungen SiPES 6 - SiPES 11 wurden nach einem Verfahren gemäß EP 0092701 hergestellt.
Die Silikon-Polyesterhybridlösungen SiPES 12 wurde nach einem Verfahren gemäß EP 1072 660 hergestellt.
Hierbei wurden die Komponenten A und C aus Tabelle 1 und 2 eingesetzt. Tabelle 3 zeigen weitere relevante Daten auf.

**Tabelle 3:**

| Bezeichnung | Polyorgano-siloxan | Polyester | Lösungsmittel | Anteil Silikon [%] | Viskosität [mPas] | Festkörper [%] |
|---|---|---|---|---|---|---|
| SiPES 6 | POS 1 | PES 1 | EtiBu | 30 | 18010 | 69,8 |
| SiPES 7 | POS 2 | PES 2 | DEC | 30 | 4270 | 61,8 |
| SiPES 8 | POS 2 | PES 3 | MPK | 30 | 1983 | 69,8 |
| SiPES 9 | POS 2 | PES 4 | MIBK | 30 | 2490 | 69,1 |
| SiPES 10 | POS 3 | PES 5 | iBuAc | 30 | 29740 | 70,4 |
| SiPES 11 | POS 3 | PES 3 | MPK | 50 | 2370 | 71,3 |
| SiPES 12 | POS 3 | PES 4 | MIBK | 80 | 2150 | 75,9 |

1.4 Herstellung von lösungsmittelbasierten Silikon-Polyesterhybridlösungen (Variante 2)
Die Silikon-Polyesterhybridlösung SiPES 1 - SiPES 5 wurden nach einem Verfahren gemäß DE102013218981, Beispiel 1 hergestellt.
Hierbei wurden die organischen Polymere als Monomere eingesetzt. Tabelle 4 zeigt relevante Daten dieser Silikon-Polyesterhybridlösung SiPES 1 - SiPES 5.

**Tabelle 4:**

| Bezeichnung | Verwendetes Polyorganosiloxan | Lösungsmittel | Anteil Silikon [%] | Viskosität [mPas] | Festkörper [%] |
|---|---|---|---|---|---|
| SiPES 1 | POS 1 | MIBK | 30 | 7220 | 91,2 |
| SiPES 2 | POS 2 | MIBK | 30 | 6400 | 89,8 |
| SiPES 3 | DC 3074 | MIBK | 30 | 6530 | 90,4 |
| SiPES 4 | DC 3074 | EtAc | 30 | 6210 | 89,1 |
| SiPES 5 | DC 3074 | EtAc | 40 | 5740 | 88,4 |

1.5 Lösungsmittelbasierte, epoxidbasierte Polyorganosiloxanhybrid-Lösung (zur Vereinfachung wird im Weiteren als Silikon-Polyepoxidhybridlösung genannt) Es wurde das handelsübliche Silikopon^{®} EW von der Fa. Evonik Industries verwendet.
2. Herstellung von Polyorganosiloxanhybrid-Dispersionen

Es wurden die o.g. lösungsmittelbasierten Silikon-Polyesterhybridlösungen (Variante 1 und 2) und die o.g. lösungsmittelbasierte Silikon-Polyepoxidhybridlösung eingesetzt, welche in der u.g. Vorschriftbeschreibung als Polyorganosiloxanhybridharz bezeichnet werden.

### 2.1 Vorschrift 1, erfindungsgemäß:

100,0 Gramm einer 20%igen Lösung von Poval^{®} 4-88 in voll-entionisiertem (VE) Wasser wird in einem Behälter bei Raumtemperatur vorgelegt. Anschließend werden 360,0 Gramm eines Polyorganosiloxanhybridharzes, gelöst in entsprechenden Mengen Lösungsmittel, zudosiert. Die Drehzahl des Rührorgans liegt hierbei bei 1000 UpM. Es entsteht eine hochviskose Paste, die nachdem die Zugabe des Harzes beendet wurde, weitere 60 Minuten bei 1000 UpM gerührt wurde. Anschließend werden 140,0 Gramm VE-Wasser zudosiert. Im nächsten Schritt erfolgt das Abtrennen des Lösemittels durch Destillation. Dazu wird die Temperatur auf 50 °C erhöht und der Druck auf 40 mbar reduziert. Anschließend wird der Festkörper der Dispersion bestimmt. Diese wird anschließend durch Zugabe unter Rühren von VE-Wasser auf 50,0% eingestellt.

### 2.2 Vorschrift 2, erfindungsgemäß:

Wie Vorschrift 1, mit der Maßgabe, dass die Emulgatorlösung eine 20%ige Lösung des Poval^{®} 3-80 in voll-entionisiertem (VE) Wasser ist.

### 2.3 Vorschrift 3, erfindungsgemäß:

Wie Vorschrift 1, mit der Maßgabe, dass die Emulgatorlösung eine 12,5%ige Lösung des Poval^{®} 18-88 in voll-entionisiertem (VE) Wasser ist.

### 2.4 Vorschrift 4, erfindungsgemäß:

Wie Vorschrift 1, mit der Maßgabe, dass die Emulgatorlösung eine 20%ige Lösung des Gohsenol^{®} KL-03 in voll-entionisiertem (VE) Wasser ist.

### 2.5 Vorschrift 5, erfindungsgemäß:

Wie Vorschrift 1, mit der Maßgabe, dass die Emulgatorlösung eine 20%ige Lösung des Gohsenol^{®} KL-05 in voll-entionisiertem (VE) Wasser ist.

### 2.6 Vorschrift 6, erfindungsgemäß:

Wie Vorschrift 1, mit der Maßgabe, dass 70,0 Gramm einer 20%igen Lösung von Poval^{®} 4-88 in voll-entionisiertem (VE) Wasser und 30,0 Gramm einer 50%igen Lösung von Tergitol^{®} 15-S-5 in voll-entionisiertem (VE) Wasser in einem Behälter bei Raumtemperatur vorgelegt werden.

Von jeder hergestellten Dispersion E1 - E30 wurden Teilchengröße, Flammpunkt und Restlösungsmittelgehalt bestimmt. Die Werte können aus Tabelle 5 entnommen werden. Alle Dispersionen wurden auf einen Festkörpergehalt von 50 Gew.-% eingestellt.

**Tabelle 5:**

| Dispersion | Polyurganosiloxanhybridharz | Vorschrift | Durchmesser [nm] | Flammpunkt [°C] | Restlösungsmittelgehalt [Gew.-%] |
|---|---|---|---|---|---|
| E1 | SiPES 1 | 1 | 634 | >100 | 0,5 |
| E2 | SiPES 1 | 2 | 587 | >100 | 0,6 |
| E3 | SiPES 2 | 3 | 434 | >100 | 0,4 |
| E4 | SiPES 3 | 4 | 635 | >100 | 0,3 |
| E5 | SiPES 4 | 5 | 403 | >100 | 0,5 |
| E6 | SiPES 5 | 6 | 515 | >100 | 0,6 |
| E7 | SiPES 6 | 1 | 423 | >100 | 0,6 |
| E8 | SiPES 6 | 2 | 528 | >100 | 0,5 |
| E9 | SiPES 7 | 3 | 393 | >100 | 0,6 |
| E10 | SiPES 7 | 4 | 448 | >100 | 0,4 |
| E11 | SiPES 8 | 3 | 432 | >100 | 0,5 |
| E12 | SiPES 8 | 4 | 439 | >100 | 0,7 |
| E13 | SiPES 8 | 1 | 695 | >100 | 0,3 |
| E14 | SiPES 8 | 1 | 854 | >100 | 0,1 |
| E15 | SiPES 8 | 3 | 545 | 49 | 3,3 |
| E16 | SiPES 9 | 1 | 603 | >100 | 0,9 |
| E17 | SiPES 9 | 2 | 719 | >100 | 0,2 |
| E18 | SiPES 9 | 3 | 727 | >100 | 0,3 |
| E19 | SiPES 9 | 4 | 728 | >100 | 0,3 |
| E20 | SiPES 10 | 5 | 472 | >100 | 0,5 |
| E21 | SiPES 11 | 1 | 503 | >100 | 0,4 |
| E22 | SiPES 11 | 1 | 628 | 42 | 2,0 |
| E23 | SiPES 11 | 1 | 625 | 31 | 4,0 |
| VE24 | SiPES 11 | 1 | 729 | 23 | 6,1 |
| E25 | SiPES 12 | 4 | 607 | >100 | 0,2 |
| E26 | Silikopon EW | 1 | 564 | >100 | 0,1 |
| E27 | Silikopon EW | 2 | 434 | >100 | 0,2 |
| E28 | Silikopon EW | 3 | 397 | >100 | 0,2 |
| E29 | Silikopon EW | 4 | 494 | >100 | 0,3 |
| E30 | Silikopon EW | 5 | 827 | >100 | 0,5 |

Der Restlösungsmittelgehalt der erfindungsgemäßen Dispersionen lag unter 6 Gew.-%. Die Flammpunkte der erfindungsgemäßen Dispersionen lagen in allen Fällen höher als der Flammpunkt des Vergleichsbeispiels (VE24). Insbesondere bei den erfindungsgemäßen Dispersionen mit einem Restlösungsmittelgehalt von <1 Gew.-% wurde der Flammpunkt von >100°C angegeben, da hier die Dispersionen aufgrund des Wassergehaltes gesiedet haben und kein Flammpunkt bestimmt werden konnte.

Als Vergleichsbeispiel VE24 wurde eine Dispersion mit einem Restlösungsmittelgehalt von 6,1 Gew.-% und einem Festkörpergehalt von 50 Gew.-% herangezogen. Um VE24 mit diesem Restlösungsmittelgehalt herzustellen, wurde zweckmäßigerweise das erfindungsgemäße Verfahren frühzeitig beendet. Der Flammpunkt lag dementsprechend niedriger.

Somit konnte festgestellt werden, dass mit dem erfindungsgemäßen Verfahren der Flammpunkt einer wässrigen Polyorganosiloxanhybridharz-Dispersion erhöht werden kann.

### 3. Abgrenzung zu WO 2015/091901, im Weiteren "Wacker" genannt

Es wurde ein Silikonmodifiziertes Polyesterharz gemäß Beispiel 5, 6, 7, 10, 11 und 12 nach Wacker mit einem Lösungsmittelgehalt von 40 Gew.-% herangezogen und eine Dispersion nach dem "Wacker"-Verfahren hergestellt.

Dazu wurde unter Vakuum das Silikon-Polyesterharz bei maximal 90°C destilliert bis die Harzmasse eine Viskosität angenommen hat, bei dem das Harz noch verarbeitbar war. Die Verarbeitbarkeit ist erforderlich, um das Emulgieren im nächsten Schritt zu ermöglichen. Da in der WO 2015/091901 keine Angabe hinsichtlich der Temperatur und Dauer offenbart, wurde eine Temperatur unterhalb des Siedepunktes von Wasser herangezogen. Der Festkörpergehalt wurde anschließend bestimmt:
Es wurde festgestellt, dass ab einen Festkörpergehalt von 85 Gew.-% die Harzmasse nicht mehr verarbeitbar war. Sie war nicht mehr emulgierbar.

Bei einem maximalen Festkörpergehalt von 80 Gew.-% weist die Harzmasse noch eine ausreichende Verarbeitbarkeit auf, welche für die Herstellung einer Dispersion mit einem Festkörpergehalt von 30 Gew.-% bezogen auf die Polyorganosiloxanhybridharz-Dispersion eingesetzt wurde. Rechnerisch ergibt diese Dispersion einen Restlösungsmittelgehalt von 6 Gew.-%. Es ist vorstellbar, den Restlösungsmittelgehalt dieser Dispersion durch Verdünnen mit zusätzlichem Wasser zu verringern, so verringert sich jedoch der Festkörpergehalt der Dispersion dementsprechend.

Es ist daher nicht möglich, das Verfahren nach WO 2015/091901 einzusetzen, um so auf die erfindungsgemäße Dispersion zu gelangen.

### Anwendungstechnische Messungen

### 1. Applikation und Härtungsmethoden

### 1.1 Methode 1: 2K Isocyanat Vernetzung

Die erfindungsgemäßen Dispersionen E1 - E15 wurden im Verhältnis 3:1 mit Bayhydur^{®} 3100 gemischt und mit Hilfe eines Spiralrakels auf Q-Panel^{®} Farbprüfbleche aus Aluminium der Firma Q-Lab aufgezogen (Alloy 3003H14; 0.025" thick (0.6 mm); bare mill finish). Die Nassschichtdicke beträgt 100 µm. Nach 24 Stunden Trocknung bei Raumtemperatur resultieren klare, störungsfreie Filme mit 50 µm Trockenschichtdicke. Die Prüfbleche wurden für 10 Tage bei 23 °C und 65% relativer Luftfeuchte gealtert.

### 1.2 Methode 2: Thermische Vernetzung

Die erfindungsgemäßen Dispersionen E16 - E23 und E25 - E30 werden mit Hilfe eines Spiralrakels auf Q-Panel^{®} Farbprüfbleche aus Aluminium der Firma Q-Lab aufgezogen (Alloy 3003H14; 0.025" thick (0.6 mm); bare mill finish). Die Nassschichtdicke beträgt 100 µm. Nach 0,5 Stunden Trocknung bei Raumtemperatur resultieren klare, störungsfreie Filme mit 50 µm Trockenschichtdicke. Nach dieser Ablüftzeit bei Raumtemperatur wurden die luftgetrockneten Prüfbleche bei 250°C für 15 Minuten in einem Umluftofen eingebrannt.

Analog wurden die lösungsmittelbasierten SiPES 1, SiPES 2, SiPES 8, SiPES 9 und SiPES 12 appliziert und ausgehärtet.

### 4. Messung der Pendelhärte

Die Filme wurden mittels Pendelhärte nach König (DIN 53 157) charakterisiert Die Werte sind aus Tabelle 6 zu entnehmen.

**Tabelle 6: Pendelhärte**

| Dispersion | Härtungsmethode | Pendelhärte |
|---|---|---|
| E1 | 1 | 134 |
| E2 | 1 | 120 |
| E3 | 1 | 133 |
| E4 | 1 | 126 |
| E5 | 1 | 126 |
| E6 | 1 | 127 |
| E7 | 1 | 139 |
| E8 | 1 | 132 |
| E9 | 1 | 121 |
| E10 | 1 | 119 |
| E11 | 1 | 129 |
| E12 | 1 | 145 |
| E13 | 1 | 134 |
| E14 | 1 | 122 |
| E15 | 1 | 139 |
| E16 | 2 | 157 |
| E17 | 2 | 163 |
| E18 | 2 | 162 |
| E19 | 2 | 168 |
| E20 | 2 | 162 |
| E21 | 2 | 158 |
| E22 | 2 | 166 |
| E23 | 2 | 155 |
| E25 | 2 | 160 |
| E26 | 2 | 159 |
| E27 | 2 | 160 |
| E28 | 2 | 171 |
| E29 | 2 | 158 |
| E30 | 2 | 155 |

| Vergleichsbeispiele, lösungsmittelbasiert | | |
|---|---|---|
| SiPES 1 | 1 | 129 |
| SiPES 2 | 1 | 132 |
| SiPES 8 | 2 | 159 |
| SiPES 9 | 2 | 168 |
| SiPES 12 | 2 | 161 |

Es hat sich gezeigt, dass die erfindungsgemäßen wässrigen Dispersionen ebenso gute Pendelhärte-Werte aufweisen wie die lösungsmittelbasierten Polyorganosiloxanhybridharze. Die Pendelhärte ist wichtig, weil sie einen direkten Aufschluss über die Gebrauchstüchtigkeit der finalen Beschichtung der erfindungsgemäßen Polyorganosiloxanhybridharz-Dispersion gibt.

## Patentansprüche

1. Wässrige Polyorganosiloxanhybridharz-Dispersion umfassend
- mindestens ein Polyorganosiloxanhybrid-Harz, wobei es sich bei dem Polyorganosiloxanhybridharz um Umsetzungsprodukte einer Zusammensetzung enthaltend
• Komponente A) 5 bis 95 Gew.-Teile, bevorzugt 10 bis 70 Gew.-Teile eines oder mehrerer Polyorganosiloxane der allgemeinen Formel
∘
RₐSi(OR')_{b}O_{(4-a-b/2)} Formel (I)
∘mit 0<a<2, 0<b<2 und a+b<4,
• optional Komponente B) 0 - 20 Gew.-Teile, bevorzugt 1 -10 Gew.-Teile eines oder mehrerer linearer und/oder verzweigter Polyorganosiloxane der Formel
∘
R"O-[R‴₂Si-O]ₙ- Formel (II)
• Komponente C) 5 bis 95 Gew.-Teile, bevorzugt 30 bis 90 Gew.-Teile eines organischen Polymers,
wobei Rₐ, R', R" und R‴ jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht, handelt,
- mindestens ein Emulgator auf Basis von teilhydrolysierten Polyvinylacetaten,
- wobei sie einen Festkörpergehalt, bestimmt in Anlehnung an DIN EN ISO 3251:2008, von 30,0 Gew.-% - 70,0 Gew.-%, bevorzugt 45,0 Gew.-% - 55,0 Gew.-%, bezogen auf die Polyorganosiloxanhybridharz-Dispersion aufweist und der Restlösungsmittelgehalt, bestimmt in Anlehnung an die European Pharmacopoeia 5.4 Residual solvents, bei < 6,0 Gew.-%, bevorzugt < 2,5 Gew-%, besonders bevorzugt < 1,0 Gew.-%, bezogen auf die Polyorganosiloxanhybridharz-Dispersion, liegt.

2. Polyorganosiloxanhybridharz-Dispersion nach Anspruch 1, **dadurch gekennzeichnet, dass** das organische Polymer ausgewählt aus der Gruppe der Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat, deren (Teil-) Hydrolysate und Derivate, Phenolharze, Fluorpolymere, Alkydharze und Mischungen daraus.

3. Polyorganosiloxanhybridharz-Dispersion nach Anspruch 1 oder 2, **dadurch gekennzeichnet, dass** das organische Polymer Hydroxylgruppen und/oder acide Wasserstoff enthält.

4. Polyorganosiloxanhybridharz-Dispersion nach einem der Ansprüche 1 - 3, **dadurch gekennzeichnet, dass** es sich bei den Emulgatoren um teilhydrolysierte Polyvinylacetate mit einem Alkoholysegrad zwischen 10% - 99% (mol/mol), bevorzugt zwischen 50% und 95% (mol/mol), und besonders bevorzugt zwischen 70% und 90% (mol/mol) handelt.

5. Polyorganosiloxanhybridharz-Dispersion nach einem der Ansprüche 1 - 4, **dadurch gekennzeichnet, dass** die teilhydrolysierten Polyvinylacetate eine Viskosität, gemessen in einer 4%igen wässrigen Polyvinylacetatlösung bei 20°C nach DIN 53015, von 1 - 50 mPa s, bevorzugt 1 - 40 mPa s und besonders bevorzugt 1 - 30 mPa s aufweisen.

6. Polyorganosiloxanhybridharz-Dispersion nach einem der vorgenannten Ansprüche, **dadurch gekennzeichnet, dass** sie weitere Emulgatoren ausgewählt aus der Gruppe der anionischen, kationischen, zwitterionischen oder nicht-ionischen Emulgatoren, aufweist.

7. Polyorganosiloxanhybridharz-Dispersion nach einem der vorgenannten Ansprüche, **dadurch gekennzeichnet, dass** der Flammpunkt der Dispersion gemäß der Methode in der Beschreibung > 30,0°C, bevorzugt > 60,0°C und besonders bevorzugt > 90,0°C liegt.

8. Polyorganosiloxanhybridharz-Dispersion nach einem der vorgenannten Ansprüche, **dadurch gekennzeichnet, dass** das Gewichtsverhältnis von Polyorganosiloxanhybridharz zu Emulgator oder Emulgatorsystem zwischen 5 - 50, bevorzugt zwischen 7 - 40, besonders bevorzugt zwischen 10 - 30 liegt.

9. Polyorganosiloxanhybridharz-Dispersion nach einem der vorgenannten Ansprüche, **dadurch gekennzeichnet, dass** sie weitere Zusatzstoffe aufweist, ausgewählt aus Entschäumern, Entlüftern, Rheologieadditiven, Konservierungsstoffen, Substratnetzmitteln, Vernetzern, Trocknungshilfen, Katalysatoren, Antioxidantien, Hautverhinderungsmitteln, Anti-Absatzmitteln, Verdickern, Koaleszenzmitteln, Filmbildehilfsmitteln, Füllstoffen, Pigmenten und/oder Dispergiermitteln.

10. Polyorganosiloxanhybridharz-Dispersion nach einem der vorgenannten Ansprüche, **dadurch gekennzeichnet, dass** als Konservierungsstoffe Fungizide, Bakterizide, Pestizide, Algizide und/oder Herbizide verwendet werden.

11. Polyorganosiloxanhybridharz-Dispersion nach einem der vorgenannten Ansprüche, **dadurch gekennzeichnet, dass** der mittlere, volumengewichtete Durchmesser der Polyorganosiloxanhybridharzpartikeln, gemessen nach ISO 13320:2009, zwischen 0,1 - 10,0 µm, bevorzugt zwischen 0,1 - 2,0 µm, besonderes bevorzugt zwischen 0,2 - 1,0 µm und ganz besonders bevorzugt zwischen 0,2 - 0,7 µm liegt.

12. Verfahren zur Herstellung wässriger Polyorganosiloxanhybridharz-Dispersion, umfassend die Schritte
a. Emulgieren einer Polyorganosiloxanhybridharz-Lösung enthaltend ein organisches Lösungsmittel mit einer Emulgatorlösung umfassend mindestens einem Emulgator auf Basis von teilhydrolysierten Polyvinylacetaten und
b. Abtrennung des Lösungsmittels.

13. Verfahren nach Anspruch 12, **dadurch gekennzeichnet, dass** eine wässrige Emulgatorlösung oder eine wässrige Emulgatorsystemlösung eingesetzt wird, wobei deren Konzentration zwischen 5 - 40 Gew.-%, bevorzugt 10 -30 Gew.-%, besonders bevorzugt 15 - 25 Gew.-% bezogen auf die Emulgatorlösung liegt.

14. Verfahren nach einem der vorgenannten Ansprüche 12 - 13, **dadurch gekennzeichnet, dass** in Schritt a) zusätzlich Wasser zugegeben wird.

15. Verfahren nach einem der vorgenannten Ansprüche 12 - 14, **dadurch gekennzeichnet, dass** nach Schritt b) der Festkörpergehalt für die wässrige Polyorganosiloxanhybridharz-Dispersion eingestellt wird.

16. Verfahren nach einem der vorgenannten Ansprüche 12 - 15, **dadurch gekennzeichnet, dass** es sich bei dem Polyorganosiloxanhybridharz um Umsetzungsprodukte einer Zusammensetzung enthaltend
- Komponente A) 5 bis 95 Gew.-Teile, , bevorzugt 10 bis 70 Gew.-Teile eines oder mehrerer Polyorganosiloxane der allgemeinen Formel
RₐSi(OR')_{b}O_{(4-a-b/2)} Formel (I)
mit 0<a<2, 0<b<2 und a+b<4,
- optional Komponente B) 0 - 20 Gew.-Teile, bevorzugt 1 -10 Gew.-Teile eines oder mehrerer linearer und/oder verzweigter Polyorganosiloxane der Formel
R"O-[R‴₂Si-O]ₙ- Formel (II)
- Komponente C) 5 bis 95 Gew.-Teile, bevorzugt 30 bis 90 Gew.-Teile eines organischen Polymers,
wobei
Rₐ, R', R" und R‴ jeweils unabhängig voneinander für einen Alkylrest mit 1 bis 8 C-Atomen oder einen aromatischen Rest mit 6 bis 20 C-Atomen steht und n für eine Zahl im Bereich von 4 bis 250 steht,
handelt.

17. Verfahren nach einem der vorgenannten Ansprüche 15 - 16, **dadurch gekennzeichnet, dass** es sich bei dem organischen Polymer um Hydroxylgruppen enthaltenden organischen Polymere handelt, vorzugsweise ausgewählt aus der Gruppe der Polyepoxide, Polyester, Polyacrylate und/oder -methacrylate sowie Copolymere daraus, Polyurethane, Cellulosederivate, Polysulphone, Polyethersulphone, Polyphenylensulfide und -oxide, Polyamide, Polyamidimid, Polyimide, Polyether, aromatische und aliphatische glycidylfunktionelle Polymere, Oligomere, Phenoxyharze, Polycarbonate, Keton-Formaldehyharze, Polyvinylharze, ausgewählt aus Polyvinylalkohol, Polyglycerine, Polyvinylacetat, deren (Teil-) Hydrolysate und Derivate, Phenolharze, Fluorpolymere, Alkydharze und Mischungen daraus.

18. Verfahren nach einem der vorgenannten Ansprüche 12 - 17, **dadurch gekennzeichnet, dass** es sich bei den Emulgatoren um teilhydrolysierte Polyvinylacetate mit einem Alkoholysegrad zwischen 10% - 99% (mol/mol), bevorzugt zwischen 50% und 95% (mol/mol), und besonders bevorzugt zwischen 70% und 90% (mol/mol) handelt.

19. Verfahren nach einem der vorgenannten Ansprüche 12 - 18, **dadurch gekennzeichnet, dass** die teilhydrolysierten Polyvinylacetate eine Viskosität, gemessen in einer 4%igen wässrigen Polyvinylacetatlösung bei 20°C nach DIN 53015, 1 - 50 mPa s, bevorzugt 1 - 40 mPa s und besonders bevorzugt 1 - 30 mPa s aufweisen.

20. Verfahren nach einem der vorgenannten Ansprüche 12 - 19, **dadurch gekennzeichnet, dass** weitere Emulgatoren ausgewählt aus der Gruppe der anionischen, kationischen, zwitterionischen oder nicht-ionischen Emulgatoren, verwendet werden.

21. Verfahren nach einem der vorgenannten Ansprüche 12 - 20, **dadurch gekennzeichnet, dass** es sich bei dem Lösungsmittel um mindestens ein organisches Lösungsmittel handelt, das bei der Herstellung des Polyorganosiloxanhybridharzes eingesetzt wurde, handelt.

22. Verfahren nach einem der vorgenannten Ansprüche 12 - 21, **dadurch gekennzeichnet, dass** das organische Lösungsmittel oder Mischungen davon einen Siedepunktsbereich von 50°C - 150°C, bevorzugt 90°C - 120°C aufweist.

23. Verfahren nach einem der vorgenannten Ansprüche 12 - 22, **dadurch gekennzeichnet, dass** die Abtrennung des Lösungsmittels mittels Destillation bei vermindertem Druck mit oder ohne Strippinggas, Wasserdampfdestillation, mittels eines Membranverfahrens, eines Dünnschichtverdampfers oder eines Gegenstromverfahrens erfolgt.

24. Verfahren nach einem der vorgenannten Ansprüche 12 - 23, **dadurch gekennzeichnet, dass** die Polyorganosiloxanhybridharz-Lösung eine Polyorganosiloxanhybridharz-Konzentration von 40,0 Gew.-% - 95,0 Gew.-%, bevorzugt 60,0 Gew.-% - 70,0 Gew.-%, bezogen auf die Polyorganosiloxanhybridharz-Lösung, aufweist.

25. Verfahren nach einem der vorgenannten Ansprüche 12 - 24, **dadurch gekennzeichnet, dass** der Flammpunkt der mit dem Verfahren hergestellten wässrigen Polyorganosiloxanhybridharz-Dispersion erhöht werden kann.

26. Verwendung der Polyorganosiloxanhybridharz-Dispersion nach einem der Ansprüche 1 - 11 in Beschichtungsstoffen, sowie Lacken und Farben, Substratbeschichtungen, Halbzeugen, Klebstoffen, Tinten, Dichtstoffen, Compoundierungsmatrizes und Schlichten.

27. Substrate, insbesondere Backbleche, Backformen, Pfannen, Metalltöpfe und dergleichen, beschichtet mit einer Zusammensetzung enthaltend einer Dispersion nach einem der Ansprüche 1 bis 11.

## Claims

1. Aqueous polyorganosiloxane hybrid resin dispersion comprising
- at least one polyorganosiloxane hybrid resin, where the polyorganosiloxane hybrid resin comprises reaction products of a composition comprising
• component A) 5 to 95 parts by weight, preferably 10 to 70 parts by weight, of one or more polyorganosiloxanes of the general formula
∘
RₐSi(OR')_{b}O_{(4-a-b/2} Formula (I)
∘with 0<a<2, 0<b<2 and a+b<4,
• optionally component B) 0-20 parts by weight, preferably 1-10 parts by weight, of one or more linear and/or branched polyorganosiloxanes of the formula
∘
R"O-[R‴₂Si-O]ₙ- Formula (II)
• component C) 5 to 95 parts by weight, preferably 30 to 90 parts by weight, of an organic polymer,
where Rₐ, R', R" and R‴ are each independently an alkyl radical having 1 to 8 carbon atoms or an aromatic radical having 6 to 20 carbon atoms and n is a number in the range from 4 to 250,
- at least one emulsifier based on partly hydrolysed polyvinylacetates,
- wherein said dispersion has a solids content, determined in accordance with DIN EN ISO 3251:2008, of 30.0% by weight - 70.0% by weight, preferably 45.0% by weight - 55.0% by weight, based on the polyorganosiloxane hybrid resin dispersion, and the residual solvent content, determined in accordance with European Pharmacopoeia 5.4 Residual solvents, is < 6.0% by weight, preferably < 2.5% by weight, more preferably < 1.0% by weight, based on the polyorganosiloxane hybrid resin dispersion.

2. Polyorganosiloxane hybrid resin dispersion according to Claim 1, **characterized in that** the organic polymer is selected from the group of the polyepoxides, polyesters, polyacrylates and/or methacrylates and copolymers thereof, polyurethanes, cellulose derivatives, polysulfones, polyether sulfones, polyphenylene sulfides and oxides, polyamides, polyamide imide, polyimides, polyethers, aromatic and aliphatic glycidyl-functional polymers, oligomers, phenoxy resins, polycarbonates, ketone-formaldehyde resins, polyvinyl resins selected from polyvinyl alcohol, polyglycerols, polyvinylacetate, (partial) hydrolysates and derivatives thereof, phenolic resins, fluoropolymers, alkyd resins and mixtures thereof.

3. Polyorganosiloxane hybrid resin dispersion according to Claim 1 or 2, **characterized in that** the organic polymer contains hydroxyl groups and/or acidic hydrogen.

4. Polyorganosiloxane hybrid resin dispersion according to any of Claims 1-3, **characterized in that** the emulsifiers are partly hydrolysed polyvinylacetates having an alcoholysis level between 10%-99% (mol/mol), preferably between 50% and 95% (mol/mol), and more preferably between 70% and 90% (mol/mol).

5. Polyorganosiloxane hybrid resin dispersion according to any of Claims 1-4, **characterized in that** the partly hydrolysed polyvinylacetates have a viscosity, measured in a 4% aqueous polyvinylacetate solution at 20°C to DIN 53015, of 1-50 mPa s, preferably 1-40 mPa s and more preferably 1-30 mPa s.

6. Polyorganosiloxane hybrid resin dispersion according to any of the preceding claims, **characterized in that** it includes further emulsifiers selected from the group of the anionic, cationic, zwitterionic or nonionic emulsifiers.

7. Polyorganosiloxane hybrid resin dispersion according to any of the preceding claims, **characterized in that** the flashpoint of the dispersion by the method in the description is > 30.0°C, preferably > 60.0°C and more preferably > 90.0°C.

8. Polyorganosiloxane hybrid resin dispersion according to any of the preceding claims, **characterized in that** the weight ratio of polyorganosiloxane hybrid resin to emulsifier or emulsifier system is between 5-50, preferably between 7-40, more preferably between 10-30.

9. Polyorganosiloxane hybrid resin dispersion according to any of the preceding claims, **characterized in that** it includes further additives selected from defoamers, deaerating agents, rheology additives, preservatives, substrate wetting agents, crosslinkers, drying aids, catalysts, antioxidants, anti-skinning agents, anti-settling agents, thickeners, coalescing agents, film-forming aids, fillers, pigments and/or dispersants.

10. Polyorganosiloxane hybrid resin dispersion according to any of the preceding claims, **characterized in that** the preservatives used are fungicides, bactericides, pesticides, algicides and/or herbicides.

11. Polyorganosiloxane hybrid resin dispersion according to any of the preceding claims, **characterized in that** the average volume-weighted diameter of the polyorganosiloxane hybrid resin particles, measured to ISO 13320:2009, is between 0.1-10.0 µm, preferably between 0.1-2.0 µm, more preferably between 0.2-1.0 µm and most preferably between 0.2-0.7 µm.

12. Process for producing aqueous polyorganosiloxane hybrid resin dispersion, comprising the steps of
a. emulsifying a polyorganosiloxane hybrid resin solution comprising an organic solvent with an emulsifier solution comprising at least one emulsifier based on partly hydrolysed polyvinylacetates and
b. removing the solvent.

13. Process according to Claim 12, **characterized in that** an aqueous emulsifier solution or an aqueous emulsifier system solution wherein the concentration is between 5-40% by weight, preferably 10-30% by weight, more preferably 15-25% by weight, based on the emulsifier solution, is used.

14. Process according to either of the preceding Claims 12 and 13, **characterized in that** water is additionally added in step a).

15. Process according to any of the preceding Claims 12-14, **characterized in that** the solids content for the aqueous polyorganosiloxane hybrid resin dispersion is adjusted after step b).

16. Process according to any of the preceding Claims 12-15, **characterized in that** the polyorganosiloxane hybrid resin comprises reaction products of a composition comprising
- component A) 5 to 95 parts by weight, preferably 10 to 70 parts by weight, of one or more polyorganosiloxanes of the general formula
RₐSi(OR')_{b}O_{(4-a-b/2)} Formula (I)
with 0<a<2, 0<b<2 and a+b<4,
- optionally component B) 0-20 parts by weight, preferably 1-10 parts by weight, of one or more linear and/or branched polyorganosiloxanes of the formula
R"O-[R‴₂Si-O]ₙ- Formula (II)
- component C) 5 to 95 parts by weight, preferably 30 to 90 parts by weight, of an organic polymer,
where
Rₐ, R', R" and R‴ are each independently an alkyl radical having 1 to 8 carbon atoms or an aromatic radical having 6 to 20 carbon atoms and n is a number in the range from 4 to 250.

17. Process according to either of the preceding Claims 15 and 16, **characterized in that** the organic polymer comprises organic polymers containing hydroxyl groups, preferably selected from the group of the polyepoxides, polyesters, polyacrylates and/or methacrylates and copolymers thereof, polyurethanes, cellulose derivatives, polysulfones, polyether sulfones, polyphenylene sulfides and oxides, polyamides, polyamide imide, polyimides, polyethers, aromatic and aliphatic glycidyl-functional polymers, oligomers, phenoxy resins, polycarbonates, ketone-formaldehyde resins, polyvinyl resins selected from polyvinyl alcohol, polyglycerols, polyvinylacetate, (partial) hydrolysates and derivatives thereof, phenolic resins, fluoropolymers, alkyd resins and mixtures thereof.

18. Process according to any of the preceding Claims 12-17, **characterized in that** the emulsifiers are partly hydrolysed polyvinylacetates having an alcoholysis level between 10%-99% (mol/mol), preferably between 50% and 95% (mol/mol), and more preferably between 70% and 90% (mol/mol).

19. Process according to any of the preceding Claims 12-18, **characterized in that** the partly hydrolysed polyvinylacetates have a viscosity, measured in a 4% aqueous polyvinylacetate solution at 20°C to DIN 53015, of 1-50 mPa s, preferably 1-40 mPa s and more preferably 1-30 mPa s.

20. Process according to any of the preceding Claims 12-19, **characterized in that** further emulsifiers selected from the group of the anionic, cationic, zwitterionic or nonionic emulsifiers are used.

21. Process according to any of the preceding Claims 12-20, **characterized in that** the solvent is at least one organic solvent that has been used in the preparation of the polyorganosiloxane hybrid resin.

22. Process according to any of the preceding Claims 12-21, **characterized in that** the organic solvent or mixtures thereof has a boiling point range of 50°C-150°C, preferably 90°C-120°C.

23. Process according to any of the preceding Claims 12-22, **characterized in that** the solvent is removed by means of distillation under reduced pressure with or without stripping gas, steam distillation, or by means of a membrane process, a thin-film evaporator or a countercurrent process.

24. Process according to any of the preceding Claims 12-23, **characterized in that** the polyorganosiloxane hybrid resin solution has a polyorganosiloxane hybrid resin concentration of 40.0% by weight-95.0% by weight, preferably 60.0% by weight-70.0% by weight, based on the polyorganosiloxane hybrid resin solution.

25. Process according to any of the preceding Claims 12-24, **characterized in that** the flashpoint of the aqueous polyorganosiloxane hybrid resin dispersion produced by the process can be increased.

26. Use of the polyorganosiloxane hybrid resin dispersion according to any of Claims 1-11 in coating materials, and also coatings and paints, substrate coatings, semifinished products, adhesives, inks, sealants, compounding matrices and sizes.

27. Substrates, especially baking trays, baking tins, pans, metal pots and the like, coated with a composition comprising a dispersion according to any of Claims 1 to 11.

## Revendications

1. Dispersion aqueuse de résine hybride de polyorganosiloxane, comprenant
- au moins une résine hybride de polyorganosiloxane, dans laquelle la résine hybride de polyorganosiloxane comprend des produits de transformation d'une composition contenant
• composant A) 5 à 95 parties en poids, de préférence 10 à 70 parties en poids d'un ou de plusieurs polyorganosiloxanes de formule générale
∘
RₐSi(OR')_{b}O_{(4-a-b/2)} Formule (I)
∘ dans laquelle 0<a<2, 0<b<2 et a+b<4,
• éventuellement composant B) 0 à 20 parties en poids, de préférence 1 à 10 parties en poids d'un ou de plusieurs polyorganosiloxanes linéaires et/ou ramifiés de formule
∘
R"O-[R‴₂Si-O]ₙ- Formule (II)
• composant C) 5 à 95 parties en poids, de préférence 30 à 90 parties en poids, d'un polymère organique,
Rₐ, R', R" et R‴ représentant, à chaque fois indépendamment les uns des autres, un radical alkyle comprenant 1 à 8 atomes de carbone ou un radical aromatique comprenant 6 à 20 atomes de carbone et n représente un nombre dans la plage de 4 à 250,
- au moins un émulsifiant à base de poly(acétates de vinyle) partiellement hydrolysés,
- présentant une teneur en solides, déterminée selon la norme DIN EN ISO 3251:2008, de 30,0 % en poids à 70,0 % en poids, de préférence 45,0 % en poids à 55,0 % en poids, sur la base de la dispersion de résine hybride de polyorganosiloxane et la teneur en solvant résiduel, déterminée en référence à la pharmacopée européenne 5.4, Solvants résiduels, est de < 6,0 % en poids, de préférence < 2,5 % en poids, de manière particulièrement préférée < 1,0 % en poids, par rapport à la dispersion de résine hybride de polyorganosiloxane.

2. Dispersion de résine hybride de polyorganosiloxane selon la revendication 1, **caractérisée en ce que** le polymère organique est choisi dans le groupe des polyépoxydes, des polyesters, des polyacrylates et/ou des polyméthacrylates ainsi que de leurs copolymères, des polyuréthanes, des dérivés de cellulose, des polysulfones, des polyéthersulfones, des poly(sulfures et oxydes de phénylène), des polyamides, des polyamidimides, des polyimides, des polyéthers, des polymères et oligomères aromatiques et aliphatiques à fonctionnalité glycidyle, des résines phénoxy, des polycarbonates, des résines de cétone-formaldéhyde, des résines de polyvinyle, choisies parmi le poly(alcool vinylique), les polyglycérols, le poly(acétate de vinyle), leurs hydrolysats (partiels) et leurs dérivés, des résines phénoliques, des polymères fluorés, des résines alkyde et de leurs mélanges.

3. Dispersion de résine hybride de polyorganosiloxane selon la revendication 1 ou 2, **caractérisée en ce que** le polymère organique contient des groupes hydroxyle et/ou de l'hydrogène acide.

4. Dispersion de résine hybride de polyorganosiloxane selon l'une quelconque des revendications 1 à 3, **caractérisée en ce que** les émulsifiants sont des poly(acétates de vinyle) partiellement hydrolysés ayant un degré d'alcoolyse compris entre 10 % et 99 % (mol/mol), de préférence entre 50 % et 95 % (mol/mol), et de manière particulièrement préférée entre 70 % et 90 % (mol/mol).

5. Dispersion de résine hybride de polyorganosiloxane selon l'une quelconque des revendications 1 à 4, **caractérisée en ce que** les poly(acétates de vinyle) partiellement hydrolysés présentent une viscosité, mesurée dans une solution aqueuse de poly(acétates de vinyle) à 4 % à 20 °C selon la norme DIN 53015, de 1 à 50 mPa.s, de préférence 1 à 40 mPa.s et de façon particulièrement préférée 1 à 30 mPa.s.

6. Dispersion de résine hybride de polyorganosiloxane selon l'une quelconque des revendications précédentes, **caractérisée en ce qu'**elle présente d'autres émulsifiants choisis dans le groupe des émulsifiants anioniques, cationiques, zwitterioniques ou non ioniques.

7. Dispersion de résine hybride de polyorganosiloxane selon l'une quelconque des revendications précédentes, **caractérisée en ce que** le point éclair de la dispersion selon le procédé de la description est > 30,0 °C, de préférence > 60,0 °C et mieux encore > 90,0 °C.

8. Dispersion de résine hybride de polyorganosiloxane selon l'une quelconque des revendications précédentes, **caractérisée en ce que** le rapport pondéral de résine hybride de polyorganosiloxane sur émulsifiant ou système d'émulsifiant est compris entre 5 et 50, de préférence entre 7 et 40, de manière particulièrement préférée entre 10 et 30.

9. Dispersion de résine hybride de polyorganosiloxane selon l'une quelconque des revendications susmentionnées, **caractérisée en ce qu'**elle présente d'autres additifs, choisis parmi les antimousses, les agents de désaération, les additifs rhéologiques, les conservateurs, les agents mouillants de substrat, les réticulants, les adjuvants dessiccateurs, les catalyseurs, les antioxydants, les agents de prévention de formation de peau, les agents antiredéposition, les épaississants, les coalescents, les adjuvants filmogènes, les charges, les pigments et/ou les dispersants.

10. Dispersion de résine hybride de polyorganosiloxane selon l'une quelconque des revendications précédentes, **caractérisée en ce que** des fongicides, des bactéricides, des pesticides, des algicides et/ou des herbicides sont utilisés comme conservateurs.

11. Dispersion de résine hybride de polyorganosiloxane selon l'une quelconque des revendications susmentionnées, **caractérisée en ce que** le diamètre moyen pondéré en volume des particules de résine hybride de polyorganosiloxane, mesuré selon la norme ISO 13320:2009, se situe entre 0,1 et 10,0 µm, de préférence entre 0,1 et 2,0 µm, particulièrement préférablement entre 0,2 et 1,0 µm et tout particulièrement préférablement entre 0,2 et 0,7 µm.

12. Procédé de préparation d'une dispersion aqueuse de résine hybride de polyorganosiloxane, comprenant les étapes
a. émulsification d'une solution de résine hybride de polyorganosiloxane contenant un solvant organique avec une solution d'émulsifiant comprenant au moins un émulsifiant à base de poly(vinylacétates de vinyle) partiellement hydrolysés et
b. séparation du solvant.

13. Procédé selon la revendication 12, **caractérisé en ce qu'**une solution aqueuse d'émulsifiant ou une solution aqueuse de système d'émulsifiant est utilisée, dont la concentration est comprise entre 5 et 40 % en poids, de préférence entre 10 et 30 % en poids, de manière particulièrement préférée entre 15 et 25 % en poids par rapport à la solution d'émulsifiant.

14. Procédé selon l'une quelconque des revendications précédentes 12 à 13, **caractérisé en ce que** dans l'étape a) de l'eau est de plus ajoutée.

15. Procédé selon l'une quelconque des revendications précédentes 12 à 14, **caractérisé en ce qu'**après l'étape b), la teneur en solides de la dispersion aqueuse de résine hybride de polyorganosiloxane est ajustée.

16. Procédé selon l'une quelconque des revendications précédentes 12 à 15, **caractérisé en ce qu'**il s'agit, pour la résine hybride de polyorganosiloxane, de produits de transformation d'une composition contenant
- composant A) 5 à 95 parties en poids, de préférence 10 à 70 parties en poids d'un ou de plusieurs polyorganosiloxanes de formule générale
RₐSi(OR')_{b}O_{(4-a-b/2)} Formule (I)
dans laquelle 0<a<2, 0<b<2 et a+b<4,
- éventuellement composant B) 0 à 20 parties en poids, de préférence 1 à 10 parties en poids d'un ou de plusieurs polyorganosiloxanes linéaires et/ou ramifiés de formule
R"O-[R‴₂Si-O]ₙ- Formule (II)
- composant C) 5 à 95 parties en poids, de préférence 30 à 90 parties en poids, d'un polymère organique
dans laquelle
Rₐ, R', R" et R‴ représentent, à chaque fois indépendamment les uns des autres, un radical alkyle comprenant 1 à 8 atomes de carbone ou un radical aromatique comprenant 6 à 20 atomes de carbone et n représente un nombre dans la plage de 4 à 250.

17. Procédé selon l'une quelconque des revendications précédentes 15 à 16, **caractérisé en ce qu'**il s'agit, pour le polymère organique, de polymères organiques contenant des groupes hydroxyle, de préférence choisis dans le groupe des polyépoxydes, des polyesters, des polyacrylates et/ou des polyméthacrylates ainsi que de leurs copolymères, des polyuréthanes, des dérivés de cellulose, des polysulfones, des polyéthersulfones, des poly(sulfures et oxydes de phénylène), des polyamides, des polyamidimides, des polyimides, des polyéthers, des polymères et oligomères aromatiques et aliphatiques à fonctionnalité glycidyle, des résines phénoxy, des polycarbonates, des résines de cétone-formaldéhyde, des résines de polyvinyle, choisies parmi le poly(alcool vinylique), les polyglycérols, le poly(acétate de vinyle), leurs hydrolysats (partiels) et leurs dérivés, des résines phénoliques, des polymères fluorés, des résines alkyde et de leurs mélanges.

18. Procédé selon l'une quelconque des revendications précédentes 12 à 17, **caractérisé en ce que** les émulsifiants sont des poly(acétates de vinyle) partiellement hydrolysés ayant un degré d'alcoolyse compris entre 10 % et 99 % (mol/mol), de préférence entre 50 % et 95 % (mol/mol), et de manière particulièrement préférée entre 70 % et 90 % (mol/mol).

19. Procédé selon l'une quelconque des revendications précédentes 12 à 18, **caractérisé en ce que** les poly(acétates de vinyle) partiellement hydrolysés présentent une viscosité, mesurée dans une solution aqueuse de poly(acétate de vinyle) à 4 % à 20 °C selon la norme DIN 53015, de 1 à 50 mPa.s, de préférence 1 à 40 mPa.s et de façon particulièrement préférée 1 à 30 mPa.s.

20. Procédé selon l'une quelconque des revendications précédentes 12 à 19, **caractérisé en ce que** d'autres émulsifiants choisis dans le groupe des émulsifiants anioniques, cationiques, zwitterioniques ou non ioniques sont utilisés.

21. Procédé selon l'une quelconque des revendications précédentes 12 à 20, **caractérisé en ce qu'**il s'agit, pour le solvant, d'au moins un solvant organique, qui a été utilisé lors de la préparation de la résine hybride de polyorganosiloxane.

22. Procédé selon l'une quelconque des revendications précédentes 12 à 21, **caractérisé en ce que** le solvant organique ou des mélanges de solvants organiques présente(nt) un point d'ébullition compris dans une plage de 50 °C à 150 °C, de préférence de 90 °C à 120 °C.

23. Procédé selon l'une quelconque des revendications précédentes 12 à 22, **caractérisé en ce que** la séparation du solvant est effectuée au moyen d'une distillation sous pression réduite, avec ou sans gaz de strippage, d'une distillation à la vapeur d'eau, au moyen d'un procédé à membrane, d'un évaporateur à couche mince ou d'un procédé à contre-courant.

24. Procédé selon l'une quelconque des revendications précédentes 12 à 23, **caractérisé en ce que** la solution de résine hybride de polyorganosiloxane présente une concentration en résine hybride de polyorganosiloxane de 40,0 % en poids à 95,0% en poids, de préférence de 60,0 % en poids à 70,0 % en poids, par rapport à la solution de résine hybride de polyorganosiloxane.

25. Procédé selon l'une quelconque des revendications précédentes 12 à 24, **caractérisé en ce que** le point éclair de la dispersion aqueuse de résine hybride de polyorganosiloxane produite par le procédé peut être augmenté.

26. Utilisation de la dispersion de résine hybride de polyorganosiloxane selon l'une quelconque des revendications 1 à 11 dans des substances de revêtement, telles que des laques et des peintures, des revêtements de substrat, des produits semi-finis, des adhésifs, des encres, des substances d'étanchéité, des matrices de compoundage et des produits d'encollage.

27. Substrats, en particulier tôles de cuisson, moules de cuisson, poêles, casseroles métalliques et similaires, revêtus par une composition contenant une dispersion selon l'une quelconque des revendications 1 à 11.
